**Europäisches Patentamt**

**European Patent Office**

**Office européen des brevets**

(11) Veröffentlichungsnummer: **0 386 560**
**A1**

## (12) EUROPÄISCHE PATENTANMELDUNG

(21) Anmeldenummer: **90103626.9**

(22) Anmeldetag: **24.02.90**

(51) Int. Cl.5: **C02F 3/12, C02F 3/30, C02F 1/52**

(30) Priorität: **10.03.89 DE 3907734**

(43) Veröffentlichungstag der Anmeldung:
**12.09.90 Patentblatt 90/37**

(84) Benannte Vertragsstaaten:
**GR**

(71) Anmelder: **Eppler, Dieter**
**Gartenstrasse 9**
**D-7295 Dornstetten(DE)**

Anmelder: **Eppler, Alwin**
**Gartenstrasse 9**
**D-7295 Dornstetten(DE)**

(72) Erfinder: **Eppler, Dieter**
**Gartenstrasse 9**
**D-7295 Dornstetten(DE)**
Erfinder: **Eppler, Alwin**
**Gartenstrasse 9**
**D-7295 Dornstetten(DE)**

(74) Vertreter: **Patentanwälte Kohler - Schwindling - Späth**
**Hohentwielstrasse 41**
**D-7000 Stuttgart 1(DE)**

(54) **Verfahren zur biologischen Phosphatelimination.**

(57) Bei einem Verfahren zur biologischen Dephosphatierung von Wasser, insbesondere phosphathaltigem Abwasser, wird dem Wasser in einer Belüftungsstufe (2) durch Beimischen von Belebtschlamm Phosphat entzogen, das Phosphat in den Mikroorganismen des Belebtschlammes angereichert, der phosphatangereicherte Belebtschlamm (8) anschließend durch Sedimentation vom phosphatarmen Wasser (9) getrennt und vollständig oder teilweise einer anaeroben Dephosphatierungsstufe (13) zugeführt, die eine Kontaktrücklösestufe (12) und getrennt davon eine anaerobe Sedimentationsstufe (17) aufweist, wobei in der Kontaktrücklösestufe (12) in anoxischer Umgebung durch nahezu vollständige Denitrifikation, die durch Zugabe von niedermolekularen Kohlenstoffverbindungen (15), vorzugsweise Alkohol, bewirkt wird, streng anaerobe Bedingungen erzeugt werden, unter denen die phosphatreichen Organismen des phosphathaltigen Schlammes das gespeicherte Phosphat an das sie umgebende Wasser abgeben. In der an die Kontaktrücklösestufe (12) anschließenden anaeroben Sedimentationsstufe (17) wird der nunmehr phosphatarme Schlamm (18) vom phosphathaltigen Wasser (19) getrennt und der Belüftungsstufe (2) zur erneuten Phosphataufnahme zugeführt, während das überstehende phosphathaltige Wasser (19) abgezogen und einer chemischen Fällung unterzogen wird. Die Dephosphatierung wird vorzugsweise als Nebenstromverfahren durchgeführt.

## Verfahren zur biologischen Phosphatelimination

Die Erfindung betrifft ein Verfahren zur biologischen Dephosphatierung von Wasser, insbesondere phosphathaltigem Abwasser, wobei dem Wasser in einer Belüftungsstufe durch Beimischen von Belebtschlamm Phosphat entzogen, das Phosphat in den Mikroorganismen des Belebtschlammes angereichert, der phosphatreiche Belebtschlamm anschließend durch Sedimentation vom phosphatarmen Wasser getrennt und vollständig oder teilweise einer anaeroben Dephosphatierungsstufe zugeführt wird.

Ein solches Verfahren ist z.B. aus der US-PS 4 141 922 bekannt. Danach wird in einem einstufigen Phosphat-Stripper der phosphatreiche Schlamm aus dem Nachklärbecken (aerobe Sedimentations stufe) unter Sauerstoffabschluß zum teilweisen Rücklösen des aufgenommenen Phosphates in das umgebende Wasser angeregt. Der Phosphat-Stripper besteht im Prinzip aus einem Sedimentationsbecken, bei dem ein Teil der überstehenden Flüssigkeit abgezogen und mit Hilfe einer Pumpe von unten der Schlammzone des Beckens wieder zugeführt wird. Damit soll ein weiteres Auswaschen des Phosphates aus bereits abgesetztem Schlamm bewirkt werden. Ein anderer Teil der überstehenden Flussigkeit wird einer Phosphat-Fällungsstufe zugeführt und anschließend dem Abwasserzulauf zum Belüftungsbecken beigemischt. Teile des Schlammes werden an der Unterseite des Phosphat-Strippers entnommen und teilweise als Überschußschlamm aus dem Kreislauf ausgeschieden, zum größeren Teil aber als phosphatabgereicherter Rückführschlamm dem Belüftungsbecken wieder zugeführt.

Bei dieser Art der Verfahrensführung erfolgt die Phosphatrücklösung zwangsläufig nur unvollständig, und ein relativ hoher Phosphatanteil wird im Rückführschlamm der Belüftungsstufe wieder zugeführt. Dieser zwar abgereicherte aber immer noch phosphathaltige Schlamm kann dort dann auch nur eine entsprechend geringere Phosphatmenge wieder aufnehmen, so daß die maximal mögliche Effizienz der Phosphatelimination auf diese Weise nie erreicht werden kann. Außerdem ist die Anwendung des beschriebenen Verfahrens auf nichtnitrifizierende, also hochbelastete Belebungsanlagen beschränkt, da sonst Nitrite bzw. Nitrate mit dem phosphatreichen Schlamm aus dem aeroben Sedimentationsbecken in den Phosphat-Stripper gelangen würden und dort die Armut an oxidiertem Stickstoff und damit die anaeroben Bedingungen, die eine unbedingte Voraussetzung für die Phosphatrücklösung aus dem Schlamm sind, zwangsläufig zerstören müßten.

Aufgabe der Erfindung ist es, ein Verfahren zu entwickeln, das eine gegenüber dem Stand der Technik deutlich höhere Effizienz der Phosphatelimination aufweist und auch bei nitrifizierenden, schwach belasteten Belebungsanlagen anwendbar ist.

Diese Aufgabe wird erfindungsgemäß dadurch gelöst, daß die Dephosphatierungsstufe eine Kontaktrücklösestufe und getrennt davon eine anaerobe Sedimentationsstufe aufweist, daß in der Kontaktrücklösestufe in anoxischer Umgebung durch eine nahezu vollständige Denitrifikation, die durch Zugabe von niedermolekularen organischen Kohlenstoffverbindungen bewirkt wird, Nitritarmut und damit anaerobe Bedingungen erzeugt werden, unter denen die phosphatbeladenen Organismen des phosphathaltigen Schlammes das gespeicherte Phosphat an das sie umgebende Wasser abgeben, und dab in der an die Kontaktrücklösestufe anschließenden anaeroben Sedimentationsstufe der nunmehr phosphatarme Schlamm vom phosphathaltigen Wasser getrennt wird.

Durch die räumliche Auftrennung des Phosphat-Strippers in eine Kontaktrücklösestufe und eine separate Sedimentationsstufe wird erreicht, daß die beiden Teilaufgaben der Dephospatierungsstufe, nämlich das möglichst quantitative Herauslösen des Phosphates aus den Mikroorganismen des Schlammes und die saubere Trennung des nunmehr phosphatarmen Schlammes vom umgebenden phosphatangereicherten Wasser, deutlich effektiver gelöst werden. Im Endeffekt wird durch Anwendung des erfindungsgemäßen Verfahrens sowohl eine höhere relative als auch absolute Phosphatelimination erzielt, wie ein Vergleich mit dem Stand der Technik zeigt: Während in der US-PS 4 141 822 bei einem Phosphatzulauf von lediglich 5,3 bis 7,4 mg/l ein Phosphatablauf von 0,7 bis 0,8 mg/l sowie eine Phosphatelimination von 87 bis 89% beschrieben wird, erreicht das erfindungsgemäße Verfahren, wie Versuche des Anmelders ergeben haben, bei einem Phosphatzulauf von 8 bis 12 mg/l einen Phosphatablauf von 0,3 bis 0.8 mg/l und eine Phosphatelimination von 90 bis 98%.

In einer besonders bevorzugten Ausführungsform des erfindungsgemäßen Verfahrens erfolgt die Zugabe von niedermolekularen organischen Kohlenstoffverbindungen in der Kontaktrücklösestufe in Form von Alkohol, insbesondere Methanol. Damit wird, wie Versuche des Anmelders gezeigt haben, die geforderte vollständige Denitrifikation in der Kontaktrücklösestufe erreicht, die neben dem Vorliegen von anoxischen Verhältnissen eine zweite notwendige Voraussetzung für anaerobe Bedingungen ist, welche wiederum für ein effektives Rücklösen des im Schlamm angereicherten Phosphates notwendig sind. Dabei ist Methanol gegenüber Ethanol bei gleicher Wirkung wegen des Wegfallens der Genußmittelsteuer billiger. Als besonders günstig hat sich eine Dosierung von 10 bis 20 g Alkohol bezogen auf einen Kubikmeter Schlamm-Wasser-Volumen erwiesen.

Gegenüber niedermolekularen organischen Säuren, wie z.B. Essigsäure oder Ameisensäure, bei der man ein Aufblähen des Schlammes beobachtet, hat die Zugabe von Alkohol den weiteren Vorteil, daß der Schlamm in der Kontaktrücklösestufe um ca. 20 bis 40% eingedickt wird. In der folgenden Sedimentationsstufe erfolgt dann eine weitere Eindickung um nochmals 20 bis 40%. Dadurch kann mit geringeren Beckenvolumina und Schlammrückführmengen gearbeitet werden, die ein geringeres Volumen der Anlagen ermöglichen, wodurch das Verfahren billiger wird. Als ein Beispiel für die Schlammverdichtung bei der Anwendung des erfindungsgemäßen Verfahrens wurden folgende Werte gemessen (TS = Trockensubstanz):
Belüftungsstufe: TS = 5,7 g/l;
Kontaktrücklösebecken: TS = 9,5 g/l;
anaerobes Sedimentationsbecken: TS = 12 - 13,2 g/l.

In einer weiteren, besonders bevorzugten Ausführungsform wird das erfindungsgemäße Verfahren als Nebenstromverfahren betrieben, d.h., nur ein Teil des phosphathaltigen Schlammes, z.B. 10 bis 35% werden der Dephosphatierungsstufe zugeführt, während die Hauptmenge des phosphathaltigen Schlammes aus dem Nachklärbecken unmittelbar in die Belüftungsstufe zurückgeführt wird. Dadurch sind gegenüber einem Hauptstromverfahren, bei dem 100% des phosphatreichen Schlammes über eine Dephosphatierungsstufe geleitet werden, bedeutend kleinere Anlagen erforderlich. In einem Nebenstromverfahren kann außerdem die der Dephosphatierungsstufe zugeführte Schlammenge je nach Phosphatanfall im Abwasserzustrom gezielt variiert werden. Ein weiterer Vorteil des Nebenstromverfahrens besteht darin, daß nur ein kleiner Teil der aeroben Mikroorganismen der Schlammsubstanz in der anaeroben Umgebung der Dephosphatierungsstufe geschädigt wird, während sich der Großteil der Gesamtpopulation, der nach dem aeroben Nachklärbecken direkt wieder der Belüftungsstufe zugeführt wird, regenerieren kann.

Bei einer weiteren Ausführungsform des erfindungsgemäßen Verfahrens wird die Zugabe von niedermolekularen Kohlenstoffverbindungen in der Kontaktrücklösestufe so dosiert, daß sich ein Verhältnis des chemischen Sauerstoffbedarfs zur Trockensubstanzmasse des Schlamms von CSB/TS = 10 bis 100 mg/g einstellt. Bei dieser Nährstoffdosierung wird die umlaufende Schlammenge im Hinblick auf eine gleichbleibende kontinuierliche Dephosphatierungsleistung und auf eine gleichbleibende Menge (Nullwachstum) optimiert.

Bei geeigneter Variation der Prozeßparameter (Nebenstromvolumen, C-Dosierung in der Kontaktrücklösestufe) kann eine Selektion spezieller Mikroorganismen mit luxury-uptake-Verhalten von Phosphat bewirkt werden, wobei diese speziellen Mikroorganismen im hier vorliegenden Wechselprozeß von Phosphataufnahme in aerober Umgebung und Phosphatabgabe in anaerober Umgebung sich gegenüber anderen Mikroorganismen, die an der Phosphataufnahme und -abgabe nicht beteiligt sind, im Vorteil befinden. Zur besonderen Effizienz des vorliegenden biologischen Dephosphatierungsverfahrens trägt bei, daß die selektierten speziellen Mikroorganismen ihr Leistungsoptimum gerade bei dem vorliegenden Verfahrensprozeß erreichen.

Bei einer Ausführungsform des erfindungsgemäßen Verfahrens befinden sich unter den Mikroorganismen des Belebtschlammes Bakterien, die insbesondere der Gattung Acinetobacter angehören, die die derzeit höchste bekannte Phosphat-Aufnahme-und Wiederabgaberate, nämlich bis zum 20-fachen ihres Soma zeigen.

Bei einer weiteren Ausführungsform der Erfindung wird in der Kontaktrücklösestufe, z.B. durch Rührer, geringfügige Turbulenz erzeugt, die gerade so dimensioniert ist, daß eine ständige Durchmischung von Wasser und Schlamm gewährleistet ist und der Schlamm in der Schwebe bleibt, aber ein Eintrag von Sauerstoff ausgeschlossen ist. Dadurch wird einerseits die Schlammablagerung im Kontaktlösebecken verhindert und andererseits die Reaktionsoberfläche zwischen Schlammpartikeln und Wasser möglichst groß gehalten, was eine effektive Phosphatrücklösung begünstigt.

Typische Aufenthaltszeiten des Schlammes im Kontaktrücklösebecken betragen zwei bis sechs Stunden.

Bei einer weiteren, bevorzugten Ausführungsform der Erfindung erfolgt die Rückführung des sedimentierten phosphatarmen Schlammes aus der Dephosphatierungsstufe in die Belüftungsstufe zur erneuten Phosphataufnahme schubweise. Das hat den Vorteil einer mengenproportionalen Anpassung des rückgeführten Schlammes an die ebenfalls schubweise erfolgende Beschickung der Belüftungsstufe mit Abwasser. Damit ist eine Steuerung der Schlammrückführmenge in der Weise möglich, daß z.B. genau in der Phase der höchsten Belastung des Belüftungsbeckens mit phosphatreichem Abwasser die größte Rückführmenge von phosphatarmem Schlamm zugegeben wird. Die Variation dieser Schlammrückführmenge kann beispielsweise über die Größe der im Nebenstrom in die Dephosphatierungsstufe eingeleiteten Schlammenge bewirkt werden.

Die eigentliche Phosphatelimination geschieht dadurch, daß das überstehende phosphatreiche Wasser aus der anaeroben Sedimentationsstufe der Dephosphatierungsstufe abgezogen und einer chemischen Phosphatfällung zugeleitet wird. In einer vorteilhaften Ausgestaltung des Verfahrens erfolgt die Phosphatfällung durch Zugabe von Kalk oder Kalkmilch, so daß Calciumphosphat entsteht, welches landwirtschaftlich als Dünger verwertbar ist.

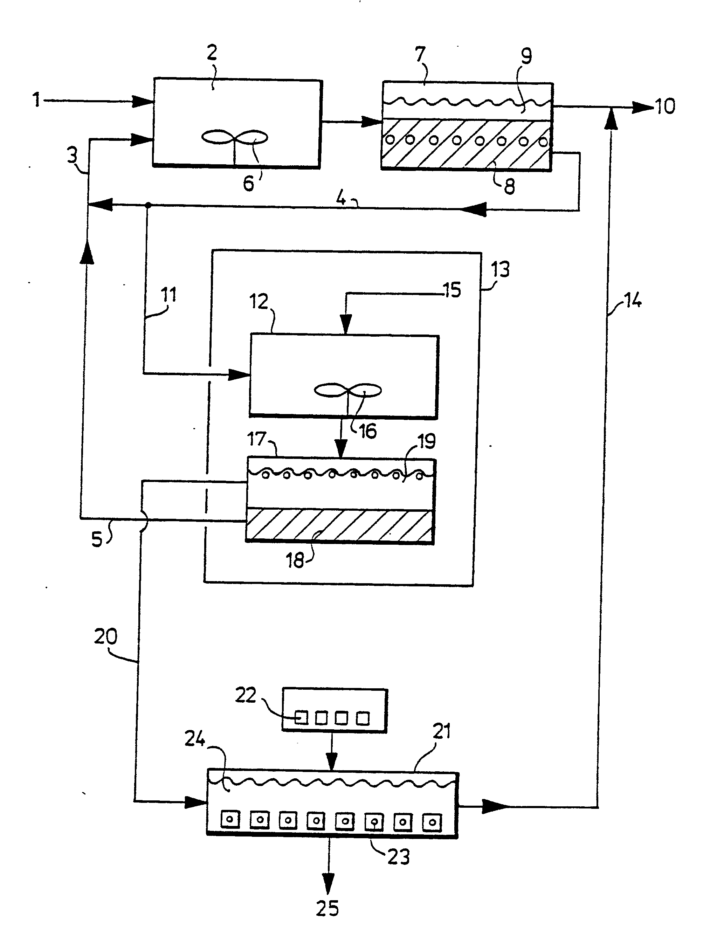

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden.

Die Figur zeigt das Fließschema eines Ausführungsbeispiels des erfindungsgemäßen Dephosphatierungsverfahrens.

Über den Zulauf 1 wird die Belüftungsstufe 2 (Belebungsbecken) mit Abwasser beschickt, welches unter anderem Phosphate enthält. Über die Rücklaufleitung 3 erfolgt die Zufuhr eines Schlammgemisches, bestehend aus phosphatreichem Rücklaufschlamm aus der Leitung 4 und phosphatarmem Rücklaufschlamm aus der Leitung 5. Die Beschickung mit phosphatarmem Rücklaufschlamm aus der Leitung 5 erfolgt schubweise in Abstimmung mit dem Dephosphatierungsbedarf des zulaufenden Abwassers. Ein Turbulenzerzeuger und/oder eine Belüftung 6 sorgt für eine ständige Durchmischung von Schlamm und Abwasser sowie für erhöhten Sauerstoffeintrag in diese Mischung, so daß aerobe Bedingungen in der Belüftungsstufe 2 herrschen. In dieser Umgebung nehmen spezielle Bakterien aus dem phosphatarmen Anteil des Rücklaufschlamms gierig Phosphate aus dem Abwasser auf, die sie als Polyphosphate bis zum 20-fachen ihres Soma einbauen können.

Das Schlamm-Wasser-Gemisch aus der Belüftungsstufe 2 wird anschließend in eine Sedimentationsstufe 7 (Nachklärbecken) überführt, wo unter aeroben Bedingungen durch Sedimentation eine Abtrennung des phosphatreichen Belebtschlammes 8 vom nunmehr phosphatarmen, geklärten Wasser 9 erfolgt. Letzteres wird über den Ablauf 10 aus dem Klärprozess abgeführt. Der phosphatreiche, sedimentierte Schlamm wird in seiner Hauptmenge über die Rückführleitung 4 der Belüftungsstufe 2 wieder zugeführt. Ein Teil des phosphatreichen Schlammes wird aber in einem Nebenstrom 11 abgezweigt und einer Kontaktrücklösestufe 12 einer Dephosphatierungsstufe 13 zugeleitet.

Im Kontaktrücklösebecken 12 wird der phosphatreiche Schlamm aus der Nebenstromleitung 11 mit Hilfe eines Turbulenzerzeugers durchmischt und im Schwebezustand gehalten. Durch Sauerstoffabschluß sind die Grundbedingungen in der Kontaktrücklösestufe 12 prinzipiell anoxisch; die durch den Rührer 16 erzeugte Turbulenzbewegung ist so schwach bemessen, daß einerseits kein Sauerstoffeintrag in das Schlamm-Wasser-Gemisch, andererseits aber auch keine Schlammablagerung am Boden der Kontaktrücklösestufe 12 erfolgt. Durch Zugabe von Alkohol 15, vorzugsweise Methanol, in die Kontaktrücklösestufe 12 in Mengen von etwa 10 bis 20 g/m³ wird eine vollständige Denitrifikation des Schlamm-Wasser-Gemisches erreicht. Damit sind streng anaerobe Bedingungen in der Kontaktrücklösestufe 12 gegeben, unter denen die phosphatangereicherten Mikroorganismen gezwungen sind, die eingelagerten Polyphosphate als Sauerstoffreserve anzugreifen. Das bei diesen Stoffwechselvorgängen frei werdende Phosphat geht in das die Mikroorganismen umgebende Wasser in Lösung. Im Endeffekt werden also die Schlammpartikel phosphatarm und das umgebende Wasser mit Phosphat angereichert. Das Schlamm-Wasser-Gemisch wird nun in die ebenfalls anaerobe Sedimentationsstufe 17 übergeleitet, wo der nunmehr phosphatarme Schlamm 18 vom phosphatangereicherten Wasser 19 abgetrennt wird. Der phosphatarme Schlamm 18 wird, wie oben beschrieben, über die Rückführleitung 5 schubweise und in der Menge je nach Bedarf dosiert der Belüftungsstufe 2 zugeführt. Das überstehende phosphatangereicherte Wasser 19 wird über die Abzugsleitung 20 in eine Fällungsstufe 21 geleitet, wo durch Zugabe von calciumhaltigen Fällungsmitteln 22, z.B. Kalk, Kalkmilch oder Calciumhydroxid, das gelöste Phosphat aus dem Wasser 19 in Form von Calciumphosphat 23 ausgefällt wird. Das nunmehr phosphatarme Wasser 24 wird über die Leitung 14 dem Ablauf 10 zugeführt, während das Calciumphosphat 23 über die Leitung 25 dem Kreislauf entnommen und z.B. als landwirtschaftliches Düngemittel weiterverwertet werden kann.

## Ansprüche

1. Verfahren zur biologischen Dephosphatierung von Wasser, insbesondere phosphathaltigem Abwasser, wobei dem Wasser in einer Belüftungsstufe (2) durch Beimischen von Belebtschlamm Phosphat entzogen, das Phosphat in den Mikroorganismen des Belebtschlammes angereichert, der phosphatreiche Belebtschlamm (8) anschließend durch Sedimentation vom phosphatarmen Wasser (9) getrennt und vollständig oder teilweise einer anaeroben Dephosphatierungsstufe (13) zugeführt wird, dadurch gekennzeichnet, daß die Dephosphatierungsstufe (13) eine Kontaktrücklösestufe (12) und getrennt davon eine Sedimentationsstufe (17) aufweist, daß in der Kontaktrücklösestufe (12) in anoxischer Umgebung durch eine nahezu vollständige Denitrifikation, die durch Zugabe von niedermolekularen organischen Kohlenstoffverbindungen (15) bewirkt wird, anaerobe Bedingungen erzeugt werden, unter denen die phosphatangereicherten Organismen des phosphathaltigen Schlammes (8) das gespeicherte Phosphat an das sie umgebende Wasser abgeben, und daß in der an die Kontaktrücklösestufe (12) anschließenden anaeroben Sedimentationsstufe (17) der nunmehr phosphatarme Schlamm (18) vom phophathaltigen Wasser (19) getrennt wird.

2. Verfahren nach Anspruch 1, dadurch gekennzeichnet, daß in der Kontaktrücklösestufe (12) die Zugabe von niedermolekularen organischen Kohlenstoffverbindungen (15) in Form von Alkohol, insbesondere Methanol erfolgt.

3. Verfahren nach Anspruch 2, dadurch gekennzeichnet, daß die Menge des in die Kontaktrücklösestufe (12) zugeführten Alkohols bezogen auf das Volumen des Schlamm-Wasser-Gemisches in dieser Stufe 10 bis 20 g/m$^3$ beträgt.

4. Verfahren nach einem der vorhergehenden Ansprüche, dadurch gekennzeichnet, daß in der Kontaktrücklösestufe (12) der Schlamm um ca. 20 bis 40 %' eingedickt wird.

5. Verfahren nach Anspruch 4, dadurch gekennzeichnet, daß in der Sedimentationsstufe (17) der Dephosphatierungsstufe (13) der Schlamm gegenüber der Kontaktrücklösestufe (12) urn weitere 20 bis 40 % eingedickt wird.

6. Verfahren nach einem der vorhergehenden Ansprüche, dadurch gekennzeichnet, daß in einem Nebenstromverfahren nur ein Teil des phosphathaltigen Schlammes (8), zum Beispiel 10 bis 35 %, der Dephosphatierungsstufe (13) zugeführt wird, während die Hauptmenge des phosphathaltigen Schlammes (8) unmittelbar in die Belüftungsstufe (2) rückgeführt wird.

7. Verfahren nach einem der vorhergehenden Ansprüche, dadurch gekennzeichnet, daß die niedermolekularen organischen Kohlenstoffverbindungen (15) in der Kontaktrücklösestufe (12) so zudosiert werden, daß sich ein Verhältnis des chemischen Sauerstoffbedarfs zur Trockensubstanzmasse des Schlammes von CSB/TS = 10 bis 100 mg/g einstellt.

8. Verfahren nach einem der vorhergehenden Ansprüche, dadurch gekennzeichnet, daß die Dosierung der niedermolekularen organischen Kohlenstoffverbindungen (15) in der Kontakt rücklösestufe (12) die Selektion spezieller Mikroorganismen mit luxury-uptake-Verhalten von Phosphat bewirkt.

9. Verfahren nach Anspruch 8, dadurch gekennzeichnet, daß die selektierten speziellen Mikroorganismen ihr Leistungsoptimum bei dem vorliegenden Prozeß erreichen.

10. Verfahren nach Anspruch 9, dadurch gekennzeichnet, daß die Mikroorganismen Bakterien sind, die insbesondere der Gattung Acinetobacter angehören.

11. Verfahren nach einem der vorhergehenden Ansprüche, dadurch gekennzeichnet, daß in der Kontaktrücklösestufe (12) z.B. durch Rührer (16) geringfügige Turbulenz erzeugt wird, die gerade so dimensioniert ist, daß eine ständige Durchmischung von Wasser und Schlamm gewährleistet ist und der Schlamm in der Schwebe bleibt, aber ein Eintrag von Sauerstoff ausgeschlossen wird.

12. Verfahren nach einem der vorhergehenden Ansprüche, dadurch gekennzeichnet, daß die Aufenthaltszeit des Schlammes in der Kontaktrücklösestufe (12) ca. 2 bis 6 Stunden beträgt.

13. Verfahren nach einem der vorhergehenden Ansprüche, dadurch gekennzeichnet, daß die Rückführung des sedimentierten phosphatarmen Schlammes (18) aus der Dephosphatierungsstufe (13) in die Belüftungsstufe (2) zur erneuten Phosphataufnahme kontinuierlich oder schubweise erfolgt.

14. Verfahren nach einem der vorhergehenden Ansprüche, dadurch gekennzeichnet, daß das überstehende phosphatreiche Wasser (19) aus der Sedimentationsstufe (17) der Dephosphatierungsstufe (13) abgezogen wird.

15. Verfahren nach Anspruch 14, dadurch gekennzeichnet, daß das abgezogene phosphatreiche Wasser (19) einer chemischen Phosphatfällung zugeführt wird.

16. Verfahren nach Anspruch 15, dadurch gekennzeichnet, daß die chemische Fällung des Phosphates durch Kalk- oder Kalkmilchzugabe (22) erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GWF: DAS GAS- UND WASSERFACH, Band 130, Nr. 2, Februar 1989, Seiten 76-79, München, DE; J.H. RENSINK et al.: "Weitgehende P- und N-Elimination aus kommunalen Abwasser mit Verbesserung der P-Rücklösung" * Seite 77, "2.Untersuchung" - Seite 79 * | 1,3,6-14 | C 02 F   3/12 C 02 F   3/30 C 02 F   1/52 |
| A | GESUNDHEITS-INGENIEUR, Band 95, Nr. 5, Mai 1974, Seiten 135-138; G. BRINGMANN et al.: "Modellverfahren zur biologischen Entphosphatung kommunaler Abwässer" * Seite 135: "Problemstellung"; Seite 137: "Phosphat-Eliminierung" * | 1,2 | |
| A | US-A-3 386 910  (FMC CORP.) * Spalte 2, Zeile 69 - Spalte 3, Zeile 26; Spalte 3, Zeile 58 - Spalte 5, Zeile 9 * | 1,12-15 | |

RECHERCHIERTE
SACHGEBIETE (Int. Cl.5)

C 02 F

Der vorliegende Recherchenbericht wurde für alle Patentansprüche erstellt

| Recherchenort | Abschlußdatum der Recherche | Prüfer |
|---|---|---|
| DEN HAAG | 05-06-1990 | TEPLY J. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
     Dokument

EPO FORM 1503 03.82 (P0403)